# FASCICULE DE BREVET EUROPEEN

(11) **EP 3 456 045 B1**
(45) Date de publication et mention de la délivrance du brevet: **02.06.2021**
(21) Numéro de dépôt: 17720464.1
(22) Date de dépôt: 27.04.2017
(51) Int. Cl.: H04N 19/176, H04N 19/11

(54) **PROCEDES ET DISPOSITIFS DE CODAGE ET DE DECODAGE D'UN FLUX DE DONNEES REPRESENTATIF D'AU MOINS UNE IMAGE**
VERFAHREN UND VORRICHTUNGEN ZUR KODIERUNG/DEKODIERUNG EINES DATENSTROMS ZUR DARSTELLUNG VON MINDESTENS EINEM BILD
METHODS AND DEVICES FOR CODING AND DECODING A DATA STREAM REPRESENTATIVE OF AT LEAST ONE IMAGE

(30) Priorité: 10.05.2016 FR 1654181
(43) Date de publication de la demande: 20.03.2019
(73) Titulaire: B-Com, 35510 Cesson-Sevigne (FR)
(72) Inventeur: HENRY, Félix, 35760 Saint Grégoire (FR); JUNG, Joël, 78320 Le Mesnil Saint Denis (FR); MOUTON, Charlène, 35760 Montgermont (FR)
(74) Mandataire: Vidon Brevets & Stratégie
(86) Numéro de dépôt international: PCT/EP2017/060038
(87) Numéro de publication internationale: WO 2017/194316

(56) Documents cités:
- EP-A1- 2 665 269
- EP-A1- 2 723 077
- AU-A1- 2015 202 844

## Description

### 1. Domaine de l'invention

Le domaine de l'invention est celui du codage et du décodage d'images ou de séquences d'images, et notamment de flux vidéo.

Plus précisément, l'invention concerne la compression d'images ou de séquences d'images utilisant une représentation par blocs des images.

L'invention peut notamment s'appliquer au codage image ou vidéo mis en œuvre dans les codeurs actuels ou à venir (JPEG, MPEG, H.264, HEVC, etc et leurs amendements), et au décodage correspondant.

### 2. Art Antérieur

Les images et séquences d'images numériques occupent beaucoup d'espace en termes de mémoire, ce qui nécessite, lorsque l'on transmet ces images, de les compresser afin d'éviter les problèmes d'encombrement sur le réseau utilisé pour cette transmission. En effet, le débit utilisable sur ce réseau est généralement limité.

On connaît déjà de nombreuses techniques de compression de données vidéo. Parmi celles-ci, le standard de compression HEVC ("High Efficiency Video Coding, Coding Tools and Spécification", Matthias Wien, Signais and Communication Technology, 2015) propose de mettre en œuvre une prédiction de pixels d'une image courante par rapport à d'autres pixels appartenant à la même image (prédiction intra) ou à une image précédente ou suivante (prédiction inter).

Plus précisément, la prédiction intra exploite les redondances spatiales au sein d'une image. Pour ce faire, les images sont découpées en blocs de pixels. Les blocs de pixels sont alors prédits à l'aide d'informations déjà reconstruites, correspondant aux blocs précédemment codés/décodés dans l'image courante selon l'ordre de parcours des blocs dans l'image.

Par ailleurs, de manière classique, le codage d'un bloc courant est réalisé à l'aide d'une prédiction du bloc courant, dit bloc prédit, et d'un résidu de prédiction ou « bloc résiduel », correspondant à une différence entre le bloc courant et le bloc prédit. Le bloc résiduel obtenu est alors transformé, par exemple en utilisant une transformée de type DCT (transformée en cosinus discrète). Les coefficients du bloc résiduel transformé sont ensuite quantifiés, puis codés par un codage entropique et transmis au décodeur, qui peut reconstruire le bloc courant en ajoutant ce bloc résiduel au bloc prédit.

Le décodage est fait image par image, et pour chaque image, bloc par bloc. Pour chaque bloc, les éléments correspondants du flux sont lus. La quantification inverse et la transformation inverse des coefficients du bloc résiduel sont effectuées. Puis, la prédiction du bloc est calculée pour obtenir le bloc prédit et le bloc courant est reconstruit en ajoutant la prédiction (le bloc prédit) au bloc résiduel décodé.

Les documents AU2015202844A1 et EP2665269A1 décrivent une méthode de codage d'images dans laquelle des modes de prédiction intra peuvent être utilisées pour coder un bloc courant d'une image. Le document EP2723077A1 décrit une méthode de codage dans laquelle une liste des modes de prédiction intra les plus probables pour coder un bloc est construite.

Dans le standard HEVC, il est possible d'effectuer une prédiction intra d'un bloc courant selon 35 modes de prédiction intra différents. Pour coder le mode de prédiction intra sélectionné pour prédire un bloc courant, le standard HEVC définit deux listes de modes de prédiction:
- une première liste dite liste MPM (pour Most Probable Mode) comprenant les 3 modes de prédiction intra les plus probables pour le bloc courant, une telle liste MPM est définie à partir des modes de prédiction préalablement sélectionnés lors du codage des blocs voisins du bloc courant,
- une deuxième liste dite liste non-MPM comprenant les 32 autres modes de prédiction intra restants, i.e les modes de prédiction intra non compris dans la liste MPM.

Un index est transmis au décodeur pour indiquer quelle liste MPM ou non-MPM est utilisée pour prédire le bloc courant. Lorsque le bloc courant est codé par un mode de prédiction intra de la liste MPM, l'index du mode de prédiction sélectionné dans la liste MPM est transmis au décodeur par un codage entropique. Lorsque le bloc courant est codé par un mode de prédiction intra de la liste non-MPM, l'index du mode de prédiction intra sélectionné dans la liste non-MPM est codé par un code de longueur fixe sur 5 bits.

La liste non-MPM comprend un grand nombre de modes de prédiction intra, le coût de codage d'un index d'un mode de prédiction de cette liste est donc élevé.

Le document "Novel Adaptive Algorithm for Intra Prédiction with Compromised Modes Skipping and Signaling Processes in HEVC", L-L. Wang, W-C Siu, IEEE, 2013, décrit une méthode de codage permettant de réduire le nombre de modes de prédiction intra utilisé pour prédire un bloc courant afin d'une part de réduire le coût de signalisation d'un mode de prédiction intra et d'autre part de réduire la complexité de sélection d'un mode de prédiction. Une telle méthode construit pour chaque bloc courant une liste comprenant 1, 3 ou 35 modes de prédiction intra en fonction de la valeur de la variance des pixels de référence du bloc courant. Les pixels de référence du bloc courant correspondent aux pixels de la ligne située au-dessus du bloc courant et de la colonne située à droite du bloc courant. Un bloc courant est ensuite prédit par un des modes de prédiction de la liste. Une telle méthode permet de réduire le coût de signalisation d'un mode de prédiction utilisé pour prédire un
bloc courant en réduisant le nombre de modes de prédiction intra disponibles pour prédire un bloc courant. Elle permet également d'accélérer l'étape de sélection d'un mode de prédiction intra pour coder un bloc courant car selon la taille de la liste des modes de prédiction, tous les modes de prédictions intra ne sont pas testés. Cette méthode se base sur le voisinage d'un bloc courant pour décider des modes de prédiction disponibles pour le bloc courant.

Cependant, avec une telle méthode, certains modes de prédiction ne sont plus disponibles pour prédire le bloc courant, ce qui peut conduire à une perte de précision de la prédiction et donc à une augmentation du coût de codage du résidu de prédiction.

Il existe donc un besoin pour une nouvelle technique de codage des modes de prédiction pour prédire un bloc courant, permettant d'améliorer la compression des données image ou vidéo.

### 3. Exposé de l'invention

L'invention vient améliorer l'état de la technique. Elle propose, à cet effet, un procédé de décodage d'un flux de données codées représentatif d'au moins une image, ladite image étant découpée en blocs, au moins deux modes de prédiction étant disponibles pour prédire un bloc, dit bloc courant, de l'image. Un tel procédé de décodage comprend, pour ledit bloc courant, les étapes suivantes:
- pour chaque mode de prédiction disponible pour prédire ledit bloc courant, obtention d'un bloc prédicteur associé au mode de prédiction disponible,
- construction d'une liste comprenant au moins un des deux modes de prédiction disponibles,
- pour au moins un mode de prédiction compris dans ladite liste, dit mode courant:
   - détermination d'une mesure de distance entre le bloc prédicteur associé audit mode courant et les autres blocs prédicteurs associés aux autres modes de prédiction disponibles et obtenus pour ledit bloc courant,
   - modification de ladite liste en fonction de ladite mesure de distance déterminée,
- décodage à partir du flux de données codées, d'une information identifiant pour ledit bloc courant, un mode de prédiction parmi la liste modifiée,
- reconstruction dudit bloc courant à partir du bloc prédicteur associé audit mode de prédiction identifié.

Le procédé de décodage selon l'invention permet de décoder une information représentative d'un mode de prédiction utilisé pour prédire un bloc, à partir d'une liste de modes de prédiction modifiée. Avantageusement, la liste de modes de prédiction est adaptée en fonction d'une mesure de distance déterminée pour des blocs prédicteurs délivrés par les modes de prédiction de la liste. Une telle adaptation permet de mieux organiser les modes de prédiction de la liste les uns par rapport aux autres en fonction de la prédiction qu'ils fournissent.

Le coût de signalisation d'un mode de prédiction de la liste pour le bloc courant, autrement dit le coût de codage d'une information identifiant pour ledit bloc courant un mode de prédiction de la liste, est ainsi optimisé. En effet, la liste des modes de prédiction est adaptée en fonction des similarités entre les prédictions fournies par ces modes de prédiction. Une telle adaptationpermet d'optimiser et de réduire le coût de codage d'une information identifiant pour ledit bloc courant un mode de prédiction de la liste.

On appelle ici mesure de distance pour un bloc prédicteur, une mesure de la différence entre la prédiction fournie par le bloc prédicteur et la prédiction fournie par d'autres blocs prédicteurs. Une telle mesure de distance permet de quantifier la distance entre les blocs prédicteurs. Une telle distance est d'autant plus grande que les prédictions fournies par ces blocs sont différentes. Il est ainsi possible d'identifier des blocs prédicteurs sensiblement proches, ou très éloignés et d'adapter la liste des modes de prédiction en conséquence.

La mesure de distance d'un bloc prédicteur est déterminée par rapport à la prédiction fournie par le bloc prédicteur, c'est-à-dire par rapport au contenu du bloc prédicteur. Ainsi, la liste est adaptée en fonction du contenu de la prédiction fournie et non estimée par rapport à un voisinage du bloc courant comme dans l'art antérieur. La liste est donc adaptée de manière plus précise.

Avantageusement, la liste peut comprendre tous les modes de prédiction disponibles pour un bloc courant ou seulement certains d'entre eux, par exemple dans le cas où certains modes de prédiction sont codés dans une autre liste telle que la liste MPM du standard HEVC.

L'invention concerne également un procédé de codage d'au moins une image sous la forme d'un flux de données codées, ladite image étant découpée en blocs, au moins deux modes de prédiction étant disponibles pour prédire un bloc de ladite image, dit bloc courant. Un tel procédé de codage comprend les étapes suivantes, pour ledit bloc courant:
- pour chaque mode de prédiction disponible pour prédire ledit bloc courant, obtention d'un bloc prédicteur associé au mode de prédiction disponible,
- construction d'une liste comprenant au moins un des deux modes de prédiction disponibles,
- pour au moins un mode de prédiction compris dans ladite liste, dit mode courant:
   - détermination d'une mesure de distance entre le bloc prédicteur associé audit mode courant et les autres blocs prédicteurs associés aux autres modes de prédiction disponibles et obtenus pour ledit bloc courant,
   - modification de ladite liste en fonction de ladite mesure de distance déterminée,
- sélection parmi la liste modifiée d'un mode de prédiction pour coder le bloc courant,
- codage dans le flux de données, d'une information identifiant pour ledit bloc courant, ledit mode de prédiction sélectionné dans la liste modifiée. Les avantages d'un tel procédé de codage sont identiques à ceux du procédé de décodage.

Les différents modes ou caractéristiques de réalisation mentionnés ci-après peuvent être ajoutés indépendamment ou en combinaison les uns avec les autres, aux caractéristiques du procédé de décodage et/ou du procédé de codage défini ci-dessus.

Selon un mode particulier de réalisation de l'invention, lorsque la mesure de distance déterminée indique que le bloc prédicteur est similaire à un bloc prédicteur associé à un autre mode de prédiction disponible, la modification de la liste correspond à une suppression de la liste dudit mode courant.

Selon ce mode particulier de réalisation de l'invention, le nombre de modes de prédiction de la liste est réduit lorsque des modes de prédiction délivrent des blocs prédicteurs identiques ou sensiblement proches. Ainsi, lorsque l'index d'un mode de prédiction dans la liste est codé par un code à longueur fixe, il est possible de réduire le nombre de bits nécessaire pour coder l'index.

Selon un autre mode particulier de réalisation de l'invention, l'autre mode de prédiction disponible n'est pas compris dans ladite liste. Ce mode particulier de réalisation de l'invention permet ainsi de supprimer les modes de prédiction de la liste qui fournissent une prédiction semblable à la prédiction d'un mode de prédiction non compris dans la liste. Par exemple, un tel mode de prédiction non compris dans la liste est un mode de prédiction préalablement codé, tel que le mode MPM du standard H.264/AVC ou la liste MPM du standard HEVC. Ce mode particulier de réalisation permet de supprimer de la liste les modes de prédiction redondants avec d'autres modes déjà codés par ailleurs.

Selon un autre mode particulier de réalisation de l'invention, la mesure de distance pour un premier bloc prédicteur est déterminée par un calcul d'une erreur quadratique calculée entre ledit premier bloc prédicteur et un deuxième bloc prédicteur, ledit premier bloc prédicteur étant similaire audit deuxième bloc prédicteur lorsque l'erreur quadratique calculée est inférieure à un seuil prédéterminé. Ce mode particulier de réalisation de l'invention permet de modifier la liste des modes de prédiction en comparant l'erreur quadratique entre des blocs prédicteurs par rapport à un seuil prédéterminé. Ainsi, il est possible d'identifier si des blocs prédicteurs sont proches ou éloignés.

Selon un autre mode particulier de réalisation de l'invention, le seuil prédéterminé varie avec la taille du bloc courant. En effet, plus le bloc courant est grand, plus il est susceptible de contenir une grande quantité d'informations.

Selon un autre mode particulier de réalisation de l'invention, les étapes de détermination d'une mesure de distance d'un bloc prédicteur associé à un mode de prédiction de la liste et de modification de ladite liste en fonction de la mesure de distance déterminée sont itérées de sorte que la liste modifiée comprenne un nombre de modes de prédiction égal à 2^{N}, N étant un nombre de bits sur lequel un index de la liste est codé. Ce mode particulier de réalisation de l'invention permet d'optimiser le nombre de modes de prédiction disponibles pour prédire le bloc courant et le coût de signalisation associé à ces modes de prédiction lorsqu'un mode de prédiction est signalé par un codage à longueur fixe.

Selon un autre mode particulier de réalisation de l'invention, la modification de la liste correspond à un ré-ordonnancement de la liste, dans lequel les modes de prédiction de la liste sont ordonnés selon un ordre décroissant de la mesure de distance déterminée pour chaque mode de prédiction de la liste. Ainsi, un tel ré-ordonnancement permet d'optimiser le codage d'un index d'une telle liste par un codage par codes à longueur variable.

Selon un autre mode particulier de réalisation de l'invention, la mesure de distance pour chaque mode de prédiction compris dans la liste est déterminée par un calcul de l'énergie du bloc prédicteur associé audit mode de prédiction et obtenu pour ledit mode courant. Selon ce mode particulier de réalisation de l'invention, les blocs prédicteurs comprenant le plus d'informations sont placés en début de liste.

Selon un autre mode particulier de réalisation de l'invention, la mesure de distance est déterminée par un calcul de la distance euclidienne entre le bloc prédicteur et un autre bloc prédicteur associé à un autre mode de prédiction. Ainsi, lorsque la liste est réordonnée, les blocs prédicteurs les plus éloignés des autres blocs prédicteurs disponibles sont placés en début de liste. Ainsi, les modes de prédiction délivrant les blocs prédicteurs les plus différents sont placés en début de liste. Il est ainsi possible de proposer plus de variétés dans les blocs prédicteurs pour les index de la liste à faible coût de codage.

Selon un autre mode particulier de réalisation de l'invention, le type de modification de la liste (suppression des modes de prédiction ou un ré-ordonnancement des modes de prédiction) est déterminé selon le type de codage de ladite image. Selon ce mode particulier de réalisation de l'invention, il est possible d'adapter la complexité du décodage en fonction du type de l'image à décoder.

L'invention concerne également un dispositif de décodage adapté pour mettre en œuvre le procédé de décodage selon l'un quelconque des modes particuliers de réalisation définis ci-dessus. Ce dispositif de décodage pourra bien sûr comporter les différentes caractéristiques relatives au procédé de décodage selon l'invention. Ainsi, les caractéristiques et avantages de ce dispositif de décodage sont les mêmes que ceux du procédé de décodage, et ne sont pas détaillés plus amplement.

Selon un mode particulier de réalisation de l'invention, un tel dispositif de décodage est compris dans un terminal.

L'invention concerne également un dispositif de codage adapté pour mettre en oeuvre le procédé de codage selon l'un quelconque des modes particuliers de réalisation définis ci-dessus. Ce dispositif de codage pourra bien sûr comporter les différentes caractéristiques relatives au procédé de codage selon l'invention. Ainsi, les caractéristiques et avantages de ce dispositif de codage sont les mêmes que ceux du procédé de codage, et ne sont pas détaillés plus amplement.

Selon un mode particulier de réalisation de l'invention, un tel dispositif de codage est compris dans un terminal, ou un serveur.

Le procédé de décodage, respectivement le procédé de codage, selon l'invention peut être mis en œuvre de diverses manières, notamment sous forme câblée ou sous forme logicielle.

Selon un mode particulier de réalisation de l'invention, le procédé de décodage, respectivement le procédé de codage, est mis en œuvre par un programme d'ordinateur. L'invention concerne également un programme d'ordinateur comportant des instructions pour la mise en œuvre du procédé de décodage ou du procédé de codage selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente des étapes du procédé de codage selon un mode particulier de réalisation de l'invention,
- la figure 2 présente des étapes du procédé de décodage selon un mode particulier de réalisation de l'invention,
- les figures 3A, 3B illustrent les principales étapes pour modifier une liste de modes de prédiction utilisée dans les procédés de codage et de décodage selon l'invention, selon différents modes particuliers de réalisation de l'invention,
- les figures 4A et 4B illustrent les principales étapes pour modifier une liste de modes de prédiction utilisée dans les procédés de codage et de décodage selon l'invention, selon d'autres modes particuliers de réalisation de l'invention,
- la figure 5 présente la structure simplifiée d'un dispositif de codage adapté pour mettre en oeuvre le procédé de codage selon l'un quelconque des modes particuliers de réalisation de l'invention,
- la figure 6 présente la structure simplifiée d'un dispositif de décodage adapté pour mettre en œuvre le procédé de décodage selon l'un quelconque des modes particuliers de réalisation de l'invention.

### 5. Description d'un mode de réalisation de l'invention

### 5.1 Principe général

Le principe général de l'invention vise à améliorer le coût de la signalisation d'un mode de prédiction utilisé pour prédire un bloc de pixels d'une image à coder. Les standards de compression actuels proposent un grand nombre de modes de prédiction pour coder un bloc afin de fournir une prédiction la plus proche possible des pixels du bloc à coder. Ainsi, le résidu de prédiction quantifié est faible, voire nul, ce qui permet de réduire le coût de codage du résidu de prédiction. Cependant, le coût de la signalisation d'un mode de prédiction augmente avec le nombre de modes de prédiction possibles. Or, il apparait que dans certains cas, des modes de prédiction fournissent des prédictions, c'est-à-dire des blocs prédits, très proches les unes des autres. Ainsi, certains modes de prédiction ne sont pas toujours utiles d'un point de vue débit/distorsion. L'invention vise à adapter le nombre de modes de prédiction disponibles pour prédire et coder un bloc d'une image afin de réduire le coût de la signalisation des modes de prédiction.

A cette fin, une liste L des modes de prédiction est créée et modifiée en fonction d'une mesure de distance déterminée par rapport au contenu d'au moins un bloc prédicteur associé à un mode de prédiction de la liste L. Une telle mesure de distance correspond à la distance calculée entre une prédiction fournie par un mode de prédiction d'une telle liste et une prédiction fournie par un autre mode de prédiction appartenant ou non à la liste selon le mode de réalisation.

On présente tout d'abord des modes de mises en oeuvre de la création et de la modification d'une telle liste, puis un procédé de codage et un procédé de décodage selon l'invention utilisant une telle liste modifiée.

### 5.2 Création et modification de la liste des modes de prédiction

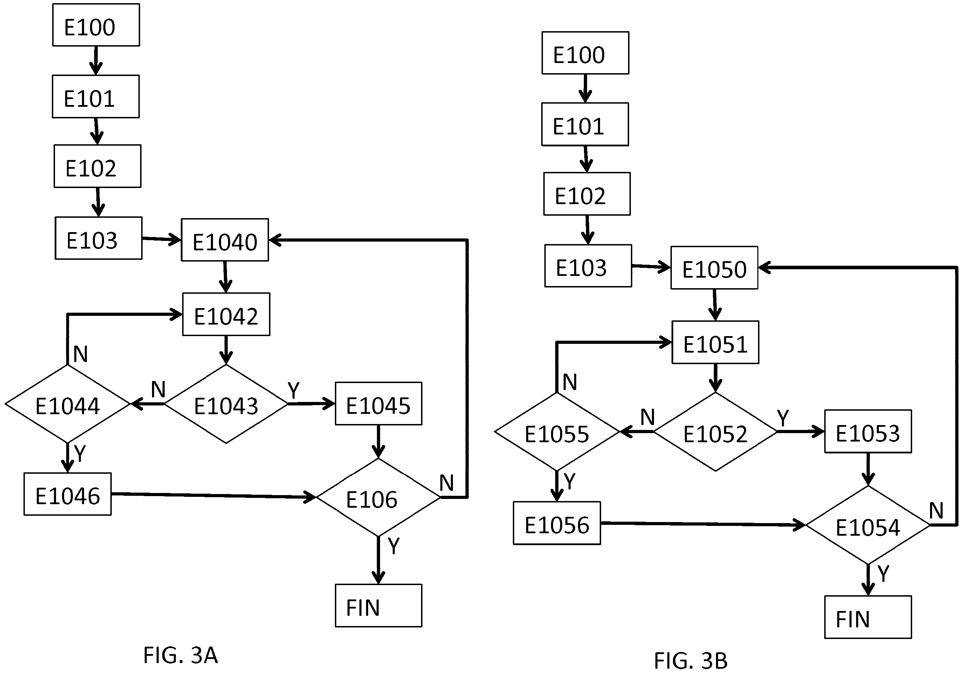

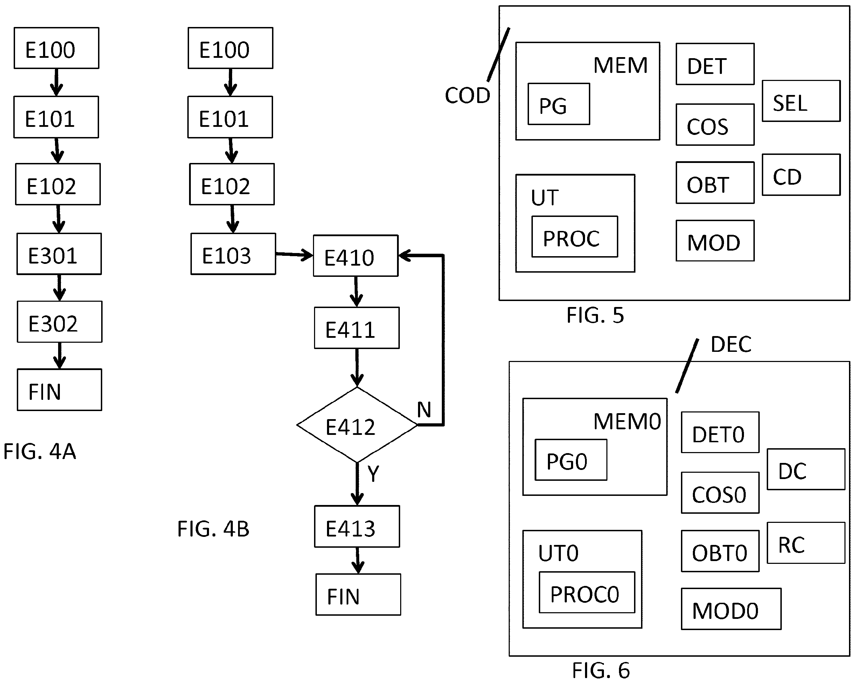

On présente ci-après en relation avec les figures 3A, 3B, 4A, 4B des variantes de mises en œuvre pour créer et modifier une liste L de modes de prédiction. L'invention est ici décrite dans le cadre d'une application aux modes de prédiction intra définis dans le standard HEVC. L'invention s'applique aisément à d'autres standards de compression et d'autres modes de prédiction.

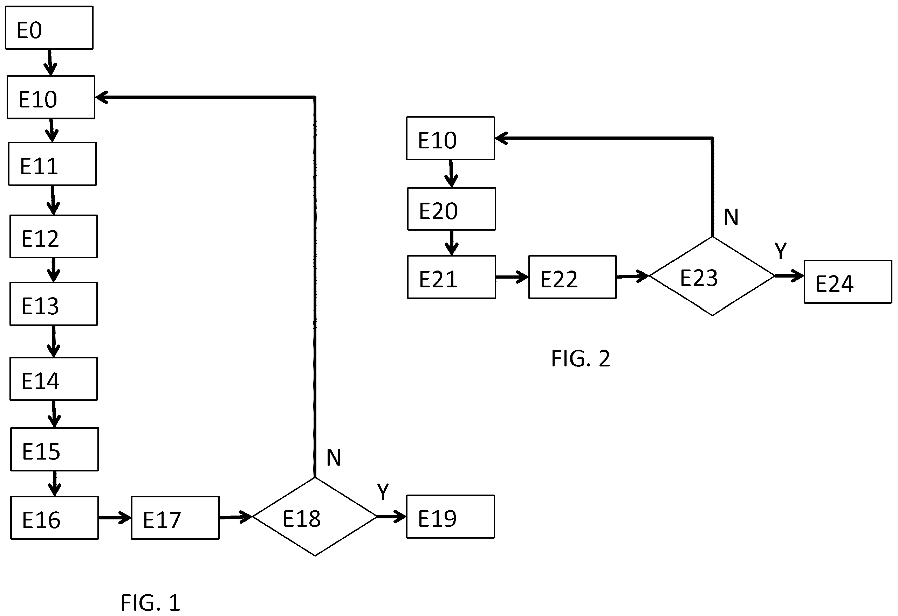

On rappelle que le standard HEVC définit 35 modes de prédiction intra:
- un mode PLANAR (mode 0), ce mode consiste à interpoler de façon linéaire les pixels du bloc prédicteur (ou bloc prédit) à partir des pixels de référence; les pixels de référence étant construits à partir des blocs voisins précédemment reconstruits,
- un mode DC (mode 1), ce mode consiste à affecter aux pixels du bloc prédicteur la même valeur correspondant à une moyenne des pixels de référence,
- 33 modes angulaires A(0)-A(32), de tels modes forment un bloc prédicteur par la prolongation des pixels de référence du bloc courant dans l'une des 33 directions associées. On présente ci-après différents modes de mise en œuvre d'une étape (E10) de création et modification de la liste des modes de prédiction utilisée dans le procédé de codage selon l'invention décrite en relation avec la figure 1B et dans le procédé de décodage selon l'invention décrite en relation avec la figure 2B.

### 5.2.1 Premier mode de mise en œuvre

Dans l'exemple illustré par la figure 3A, la modification de la liste L des modes de prédiction correspond à une suppression de la liste L des modes de prédiction qui fournissent une prédiction similaire à d'autres modes de prédiction déjà présents dans la liste L.

Lors d'une étape E100, il est déterminé les modes de prédiction intra disponibles pour prédire un bloc courant b_{c} d'une image à coder/décoder. Selon la position du bloc courant b_{c}, certains modes de prédiction intra peuvent ne pas être disponibles. Par exemple, si le bloc b_{c} est un bloc de la première ligne de l'image, les modes de prédiction utilisant les pixels de référence du bloc voisin situé au-dessus du bloc courant et du bloc situé au-dessus et à gauche du bloc courant ne sont pas disponibles. Si le bloc b_{c} est un bloc de la première colonne de l'image, les modes de prédiction utilisant les pixels de référence du bloc voisin situé à gauche du bloc courant et du bloc situé au-dessus et à gauche du bloc courant ne sont pas disponibles. On considère dans l'exemple de réalisation décrit ici que le nombre N de modes de prédiction disponibles est égal à 35.

Lors d'une étape E101, un bloc prédicteur P[K] est calculé pour chaque mode de prédiction K disponible pour le bloc courant b_{c}. Les blocs prédicteurs sont obtenus en appliquant la prédiction correspondant au mode de prédiction K (PLANAR, DC ou un des modes angulaires A(0)-A(32)). Un bloc prédicteur P[K] est donc un bloc de pixels de la même taille que le bloc courant b_{c} et comprenant la prédiction fournie par le mode de prédiction K.

Lors d'une étape E102, une liste L de modes de prédiction est construite à partir des modes de prédiction disponibles pour le bloc courant. Cette liste L correspond par exemple à une liste de modes de prédiction appelées liste non-MPM dans le standard HEVC.

La liste non-MPM est construite à partir des modes de prédiction intra restants non compris dans une liste appelée liste MPM.

Selon le standard HEVC, la liste MPM comprend 3 modes de prédiction intra les plus probables pour coder le bloc courant. On appelle Mtop et Mleft les modes de prédiction associés aux blocs situés respectivement au-dessus et à gauche du bloc courant, ces blocs ayant été préalablement codés/décodés. Si un de ces blocs n'est pas codé selon un mode de prédiction intra, le mode DC lui est attribué.

Si Mtop et Mleft sont tous deux égaux à un même mode de prédiction et que ce mode de prédiction est le mode de prédiction DC ou PLANAR, la liste MPM comprend les modes de prédiction suivants: MPM[0]=PLANAR, MPM[1]=DC, MPM[2]=A(26).

Si Mtop et Mleft sont tous deux égaux à un même mode de prédiction angulaire m(n), la liste MPM comprend les modes de prédiction suivants: MPM[0]=m(n), MPM[1]=m(2+(n+29)mod32), MPM[2]=m(2+(n-1)mod32).

Si Mtop et Mleft sont différents, la liste MPM comprend les modes de prédiction suivants: MPM[0]=Mleft, MPM[1]=Mtop, MPM[2]=Mlast, où Mlast est défini par:
si Mleft n'est pas égal au mode PLANAR et Mtop n'est pas égal au mode PLANAR, alors Mlast est égal au mode PLANAR,
si non, si Mleft n'est pas égal au mode DC et Mtop n'est pas égal au mode DC, alors Mlast est égal au mode DC,
sinon Mlast est égal au mode angulaire A(26).

Au cours de l'étape E102, lorsque la liste MPM est construite, la liste L est construite en ajoutant tous les modes de prédiction intra disponibles pour le bloc courant et non compris dans la liste MPM. Dans l'exemple de réalisation décrit ici, la liste L comprend un nombre N_{L} de 32 modes de prédiction.

Selon d'autres variantes de réalisation de l'invention, la liste L peut être construite selon d'autres critères, par exemple en ajoutant tous les modes de prédiction intra disponibles, ou encore en ajoutant tous les modes de prédiction intra disponibles sauf un mode de prédiction intra dit MPM tel que défini par le standard H.264/AVC. L'invention vise à améliorer le codage de la liste L qu'elles contiennent tous les modes de prédiction disponibles ou seulement certains d'entre eux.

Lors d'une étape E103, une variable i est initialisée à 0. Cette variable i est utilisée pour parcourir tous les modes de prédiction compris dans la liste L.

Pour chaque mode de prédiction L[i] de la liste, il est déterminé si le mode de prédiction L[i] fournit une prédiction similaire à un autre mode de prédiction de cette liste L. Pour cela, un deuxième parcours de la liste L est réalisé à l'aide de la variable j allant de la valeur i+1 à N_{L}-1. Lors d'une étape E1040, la variable j est donc initialisée à la valeur i+1. Une mesure de distance du bloc prédicteur P(L[i]) associé au mode de prédiction L[i] par rapport à un autre bloc prédicteur P(L[j]) associé au mode de prédiction L[j] est déterminée lors d'une étape E1042.

Selon le mode de mise en oeuvre décrit ici, la mesure de distance est déterminée par un calcul d'une erreur quadratique calculée à partir des pixels du bloc prédicteur P(L[i]) et des pixels du bloc prédicteur P(L[j]). Lors d'une étape E1043, il est testé si l'erreur quadratique déterminée à l'étape E1042 est inférieure à un seuil prédéterminé T1. Dans le cas où l'erreur quadratique est inférieure au seuil T1 (Y pour Yes en anglais), le mode de prédiction L[i] est supprimé de la liste L (étape E1045) et le nombre N_{L} de modes de prédiction de la liste L est donc diminué de 1. Lors de la suppression de la liste L du mode de prédiction L[i], tous les modes de prédiction de la liste L situés après l'index i dans la liste sont remontés d'un cran. Puis, on passe à l'étape E106.

Lors de l'étape E1043, dans le cas où l'erreur quadratique est supérieure ou égale au seuil T1 (N pour No en anglais), on passe à l'étape E1044.

Au cours de l'étape E1044, j est augmentée de 1 et il est vérifié si j est supérieure ou égale à N_{L}. Autrement dit, il est vérifié si tous les modes de prédiction de la liste L placés après le mode de prédiction L[i] ont été parcourus au cours de la deuxième boucle. Dans le cas négatif, le procédé reprend à l'étape E1042.

Dans le cas positif, le procédé passe à l'étape E1046 au cours de laquelle la variable i est incrémentée de 1 pour passer au mode de prédiction suivant dans la liste L. Puis le procédé passe à l'étape E106.

Lors de l'étape E106, il est vérifié si tous les modes de prédiction de la liste L ont été parcourus lors de la première boucle. Autrement dit, il est testé si i est supérieure ou égale à N_{L}-1. En cas de résultat positif au test E106, le procédé de modification de la liste L se termine. En cas de résultat négatif au test E106, le procédé reprend à l'étape E1040 pour vérifier la similarité de la prédiction du mode de prédiction suivant avec les autres modes de prédiction de la liste L.

### 5.2.2 Deuxième mode de mise en œuvre

Selon l'exemple illustré en figure 3B la modification de la liste L des modes de prédiction correspond à une suppression de la liste L des modes de prédiction qui fournissent une prédiction similaire à d'autres modes de prédiction non compris dans la liste L. Par exemple, ces autres modes de prédiction non compris dans la liste L sont les modes de prédiction de la liste MPM du standard HEVC.

Les étapes E100 à E103 de la figure 3B sont identiques à celles décrites en relation avec la figure 3A.

Dans ce mode de mise en œuvre, pour chaque mode de prédiction L[i] de la liste L, il est déterminé si le mode de prédiction L[i] fournit une prédiction similaire à un autre mode de prédiction de la liste MPM. Pour cela, un parcours de la liste MPM est réalisé à l'aide de la variable j allant de la valeur 0 à Nₘ-1, où Nₘ correspond au nombre de modes de prédiction compris dans la liste MPM.

Lors d'une étape E1050, la variable j est donc initialisée à la valeur 0. Une mesure de distance du bloc prédicteur P(L[i]) associé au mode de prédiction L[i] par rapport à un autre bloc prédicteur P(MPM[j]) associé au mode de prédiction MPM[j] est déterminée lors d'une étape E1051.

Selon le mode de mise en œuvre décrit ici, la mesure de distance est déterminée par un calcul d'une erreur quadratique calculée à partir des pixels du bloc prédicteur P(L[i]) et des pixels du bloc prédicteur P(MPM[j]). Lors d'une étape E1052, il est testé si l'erreur quadratique déterminée à l'étape E1051 est inférieure à un seuil prédéterminé T2. Dans le cas où l'erreur quadratique est inférieure au seuil T2, le mode de prédiction L[i] est supprimé de la liste L (étape E1053) et le nombre N_{L} de modes de prédiction de la liste L est donc diminué de 1. Lors de la suppression de la liste L du mode de prédiction L[i], tous les modes de prédiction de la liste L situés après l'index i dans la liste sont remontés d'un cran. Le procédé passe ensuite à l'étape E1054.

Lors de l'étape E1052, dans le cas où l'erreur quadratique est supérieure ou égale au seuil T2, le procédé passe à l'étape E1055.

Au cours de l'étape E1055, j est augmentée de 1 et il est vérifié si j est supérieure ou égale à N_{M}. Autrement dit, il est vérifié si tous les modes de prédiction de la liste MPM ont été parcourus au cours de la deuxième boucle. Dans le cas négatif, le procédé reprend à l'étape E1051.

Dans le cas positif, le procédé passe à l'étape E1056 au cours de laquelle la variable i est incrémentée de 1 pour passer au mode de prédiction suivant dans la liste L. Puis le procédé passe à l'étape E1054.

Lors de l'étape E1054, il est vérifié si tous les modes de prédiction de la liste L ont été parcourus lors de la première boucle. Autrement dit, il est testé si i est supérieure ou égale à N_{L}. En cas de résultat positif au test E1054, le procédé de modification de la liste L se termine, sinon le procédé reprend à l'étape E1050 pour vérifier la similarité de la prédiction du mode de prédiction suivant dans la liste L avec les modes de prédiction de la liste MPM.

Afin d'optimiser le coût de la signalisation d'un mode de prédiction de la liste L modifiée, il est possible d'appliquer de manière successive la modification de la liste illustrée en figure 3B, puis la modification de la liste illustrée en figure 3A.

Selon une variante de mise en œuvre, les seuils T1 et T2 peuvent varier en fonction du contexte. Par exemple, le seuil T1 et/ou T2 peut varier avec la taille du bloc courant b_{c}. Ainsi, si le seuil T1 est défini pour des blocs de taille 4x4 pixels, le seuil sera alors 4*T1 pour des blocs de taille 8x8 pixels, le seuil sera alors 16*T1 pour des blocs de taille 16x16 pixels, et le seuil sera alors 64*T1 pour des blocs de taille 32x32 pixels.

Selon une autre variante de mise en œuvre, il est possible d'utiliser un autre critère que l'erreur quadratique comme critère de similarité entre deux blocs prédicteurs. Par exemple la distance euclidienne entre deux blocs prédicteurs peut être utilisée, ou d'autres mesures de distance entre deux blocs de pixels.

### 5.2.3 Troisième mode de mise en œuvre

Selon l'exemple illustré en la figure 4A, la modification de la liste L des modes de prédiction correspond à un tri de la liste L des modes de prédiction en fonction d'un critère déterminé par rapport au contenu des blocs prédicteurs associés aux modes de prédiction de la liste. Selon ce mode de mise en œuvre, les étapes E100-E102 de la figure 4A sont identiques à celles décrites en relation avec la figure 3A.

Au cours d'une étape E301, l'énergie E(L[i]) d'un bloc prédicteur P(L[i])) associé à un mode de prédiction L[i] de la liste L est calculée pour chaque mode de prédiction L[i]. L'énergie E(L[i]) d'un bloc prédicteur P(L[i])) est calculée à partir de la valeur des pixels du bloc prédicteur.

Au cours d'une étape E302, la liste L est triée de sorte à classer les modes de prédiction de la liste selon un ordre d'énergie E(L[i]) décroissante.

Avantageusement, ce mode particulier de réalisation permet d'optimiser le codage de l'index en fournissant les prédictions fournissant le plus d'information au début de la liste L.

### 5.2.4 Quatrième mode de mise en œuvre

Selon l'exemple illustré en figure 4B, la modification de la liste L des modes de prédiction correspond à un tri de la liste L des modes de prédiction en fonction d'un critère déterminé par rapport au contenu des blocs prédicteurs associés aux modes de prédiction de la liste. Dans l'exemple de réalisation décrit ici, le critère correspond à une distance entre les blocs. Selon ce mode de mise en oeuvre, les étapes E100-E103 de la figure 4B sont identiques à celles décrites en relation avec la figure 3A. La distance d'un bloc prédicteur par rapport à un autre bloc prédicteur est calculée et sauvegardée dans une table T en association avec les modes de prédiction pour lesquels elle a été calculée. Initialement, la table T est vide. Suite à l'étape E103 d'initialisation de la variable i à la valeur 0, une distance entre le bloc prédicteur P(L[i]) et chaque bloc prédicteur P(L[k]), k allant de 0 à N_{L} est calculée au cours d'une étape E410. Par exemple, une telle distance est calculée par la distance euclidienne entre un vecteur comprenant les valeurs des pixels du bloc prédicteur P(L[i]) et un vecteur comprenant les valeurs des pixels du bloc prédicteur P(L[k]). Les distances calculées pour le bloc prédicteur P(L[i]) sont sauvegardées dans la table T selon un ordre de distance décroissant.

Au cours d'une étape E411, la variable i est incrémentée de 1 pour passer au mode de prédiction suivant dans la liste L. Au cours d'une étape E412, il est vérifié si tous les modes de prédictions de la liste L ont été parcourus. Autrement dit, il est testé au cours de l'étape E412, si i est supérieure ou égale à N_{L}. Si c'est le cas, le procédé passe à l'étape E413. Sinon, le procédé reprend à l'étape E410 pour traiter le mode de prédiction suivant dans la liste L.

Au cours de l'étape E413, la liste est L est mise à jour par un tri des modes de prédiction L[i] de sorte à ce que la liste L présente les modes de prédiction L[i] dans un ordre décroissant des distances entre blocs prédicteurs sauvegardées dans la table T. Autrement dit, après le tri par distance décroissante, la liste L présente les modes de prédiction du plus éloigné des autres modes au plus proche des autres modes.

Un tel mode de mise en oeuvre permet de proposer en début de liste des modes de prédictions les plus éloignés et donc les prédictions les plus différentes possibles associées à un coût de codage le plus faible dans le cas d'un codage du mode de prédiction selon un code à longueur variable.

De manière alternative, ce mode de mise en œuvre peut utiliser un autre critère que la distance euclidienne entre deux blocs prédicteurs pour trier la liste L. Par exemple, il est possible de trier la liste L par ordre décroissant de l'erreur quadratique calculée entre deux blocs prédicteurs.

### 5.2.5 Variantes de réalisation

Les variantes de réalisation présentées ci-dessus peuvent s'appliquer indépendamment ou en combinaison les unes des autres avec l'un quelconque des modes particuliers de mise en œuvre présentés ci-dessus.

### 5.2.5.1 Contrôle de la taille de la liste L

Selon une variante de réalisation, lorsque la liste L est modifiée par suppression, sa taille est contrôlée de sorte à optimiser le nombre de modes de prédiction compris dans la liste L par rapport à son coût de codage.

Selon cette variante, lors de l'étape E103 d'initialisation, la liste L est sauvegardée dans une liste temporaire Lₜ. Lorsque la liste L est modifiée au cours de l'étape E1045 de la figure 3A ou E1053 de la figure 3B, il est vérifié si le nombre N_{L} de modes de prédiction compris dans la liste L modifiée est une puissance entière de 2, autrement dit si N_{L} peut s'écrire sous la forme 2^{b} où b est un entier et représente le nombre de bits nécessaire au codage d'un index de la liste. Si N_{L} est une puissance entière de 2, la liste L modifiée est sauvegardée dans la liste temporaire Lₜ.

A l'issue des étapes de modification de la liste L, càd après l'étape E106 de la figure 3A ou E1054 de la figure 3B, la liste L est remplacée par la liste temporaire Lₜ. La liste temporaire Lₜ comprend la dernière liste L modifiée dont le nombre de modes de prédiction est une puissance de 2.

Ainsi, la réduction du nombre de modes de prédiction de la liste est optimisée par rapport au coût de codage d'un mode de prédiction de cette liste.

### 5.2.5.2 Adaptation contextuelle

La méthode de modification (suppression de modes de prédiction, ou tri) de la liste L peut dépendre du type de l'image à décoder/coder à laquelle appartient le bloc courant b_{c}. Par exemple, un bloc courant appartenant à une image de type intra, la liste L pourra être modifiée via un tri tel que décrit en relation avec les figure 4A ou 4B car une telle méthode est moins gourmande en calcul. Pour une image de type inter, la liste L pourra être modifiée via la suppression des modes de prédiction redondants telle que décrite en relation avec les figure 3A ou 3B.

### 5.2.5.3 Autre méthode de suppression des blocs similaires de la liste L

En variante, la suppression de la liste L d'un mode de prédiction fournissant une prédiction similaire à un autre mode de prédiction peut réaliser via un algorithme de type Pairwise Nearest Neighbor décrit dans le document "A new vector Quantization clustering algorith", W.H. Equitz, IEEE Transactions on Accoustic, Speech, Signal Process, 37-10, pp 1568-1575, 1989.

### 5.3 Procédé de codage

La figure 1 présente des étapes du procédé de codage d'une séquence d'images I₁, I₂, ..., I_{N} à coder sous la forme d'un flux de données codées STR selon un mode particulier de réalisation de l'invention. Par exemple, un tel procédé de codage est mis en œuvre par un dispositif de codage tel que décrit en relation avec la figure 5. Une séquence d'images I₁, I₂, ..., I_{N} à coder est fournie en entrée du procédé de codage. Le procédé de codage délivre en sortie un flux de données codées STR représentatif de la séquence d'images fournie en entrée.

De manière connue, le codage de la séquence d'images I₁, I₂, ..., I_{N} est fait image par image selon un ordre de codage préalablement établi et connu du décodeur. Par exemple, les images peuvent être codées dans l'ordre temporel I₁, I₂, ..., I_{N} ou selon un autre ordre, par exemple I₁, I₃, I₂, ..., I_{N}.

Lors d'une étape E0, une image Iₖ à coder de la séquence d'images I₁, I₂, ..., I_{N} est découpée en blocs de taille maximale. Chaque bloc de taille maximale pouvant être redécoupé en blocs plus petits. Par exemple, un bloc de taille maximal est de taille 32x32 pixels. Un tel bloc de taille maximal peut être subdivisé en sous-blocs carrés ou rectangulaires, par exemple de taille 16x16, 8x8, 4x4, 16x8, 8x16, .... Puis, lors de l'étape E0, un bloc b_{c} à coder d'une image Iₖ est sélectionné selon un sens de parcours de l'image Iₖ prédéterminé. Lors d'une étape E10, une liste L de modes de prédiction pour coder le bloc courant b_{c} est créée et modifiée. L'étape E10 de création et de modification de la liste L comprend un ensemble de sous-étapes qui ont été décrites ci-dessus selon différents modes de réalisation de réalisation de l'invention en relation avec les figures 3A, 3B, 4A et 4B.

Une fois la liste L des modes de prédictions créée modifiée, lors d'une étape E11, un mode de prédiction pour coder le bloc courant b_{c} est sélectionné parmi les modes de prédictions de la liste L, par exemple le mode de prédiction fournissant le meilleur compromis débit/distorsion pour le bloc courant est sélectionné.

Lors d'une étape E12, une information identifiant le mode de prédiction sélectionné est codée dans un flux de données codées STR pour le bloc courant b_{c}. Par exemple, une telle information est codée dans le flux sous la forme d'un index idx codé par un code à longueur fixe ou variable.

Lors d'une étape E13, un résidu de prédiction RES est calculé à partir du bloc courant b_{c} et du bloc prédicteur P(L[idx]) associé au mode de prédiction sélectionné lors de l'étape E11. Le résidu de prédiction RES est obtenu par la différence entre le bloc courant à coder b_{c} et le bloc prédicteur P(L[idx]).

Lors d'une étape E14, de manière connue, le résidu de prédiction RES est ensuite transformé, par exemple par une transformée DCT, et quantifié. Des coefficients de résidus transformés quantifiés sont alors obtenus.

Lors d'une étape E15, les coefficients de résidus transformés quantifiés sont ensuite codés par un module de codage entropique, par exemple un codeur CABAC décrit dans D. Marpe, H. Schwarz, T. Wiegand, « Context-based adaptive binary arithmetic coding in the H.264/AVC video compression standard » IEEE Transactions on Circuits and Systems for Video Technology (Volume:13 , Issue: 7), pages 620 - 636, July 2003 , sous la forme d'un flux de données codées STR. Au cours de l'étape E15, une information identifiant le mode de prédiction sélectionné lors de l'étape E11 est codée dans le flux de données codées STR pour le bloc courant b_{c}. Par exemple, une telle information est codée dans le flux sous la forme d'un index idx codé par un code à longueur fixe ou variable.

Lors d'une étape E16, un résidu de prédiction RES' est reconstruit en appliquant aux coefficients transformés quantifiés une quantification inverse et une transformation inverse. Lors d'une étape E17, un bloc de pixels REC est reconstruit en ajoutant le résidu de prédiction reconstruit RES' au bloc prédicteur P(L[idx]) associé au mode de prédiction sélectionné lors de l'étape E11.

Lors d'une étape E18, il est vérifié si tous les blocs de l'image à coder ont été codés. Dans le cas négatif, le procédé de codage reprend à l'étape E10 en procédant au bloc suivant selon un parcours prédéterminé de l'image à coder.

Dans le cas où tous les blocs de l'image ont été traités, lors d'une étape E19, une image Iₖ^{rec} est reconstruite à partir des blocs reconstruits REC de l'image et sauvegardée dans une liste d'images de référence pour être utilisée ultérieurement comme référence lors du codage des images suivantes de la séquence d'images.

### 5.4 Procédé de décodage

La figure 2 présente des étapes d'un procédé de décodage d'un flux STR de données codées représentatif d'une séquence d'images I₁, I₂, ..., I_{N} à décoder selon un mode particulier de réalisation de l'invention.

Par exemple, le flux de données STR a été généré via le procédé de codage présenté en relation avec la figure 1. Le flux de données STR est fourni en entrée d'un dispositif de décodage DEC, par tel que décrit en relation avec la figure 6.

Le procédé de décodage procède au décodage du flux image par image. Pour chaque image à décoder, le procédé de décodage procède au décodage de l'image bloc par bloc.

Pour un bloc b_{c} d'une image à reconstruire, lors de l'étape E10, une liste L de modes de prédiction associés au bloc courant b_{c} est créée et modifiée selon un mode particulier de réalisation identique au mode de réalisation utilisé lors du codage du flux de données STR. L'étape E10 de création et de modification de la liste L comprend un ensemble de sous-étapes qui ont été décrites ci-dessus selon différents modes de réalisation de réalisation de l'invention en relation avec les figures 3A, 3B, 4A et 4B.

Lors d'une étape E20, les données du flux de données STR correspondant au bloc b_{c} sont décodées par un module de décodage entropique pour fournir d'une part des éléments de syntaxe relatifs au mode de codage (ou mode de prédiction) du bloc courant b_{c} et d'autre part un groupe de coefficients de résidus de prédiction du bloc courant b_{c}. Les éléments de syntaxe décodés comprennent notamment une information de mode de prédiction identifiant pour le bloc courant b_{c} un mode de prédiction parmi les modes de prédiction de la liste L de modes de prédiction. Par exemple, une telle information est codée dans le flux sous la forme d'un index idx de la liste L.

Lors d'une étape E21, les coefficients de résidus de prédiction du bloc b_{c} subissent une quantification inverse, puis une transformation inverse pour délivrer un résidu de prédiction décodé RES'.

Lors d'une étape E22, le bloc courant b_{c} est reconstruit à partir du bloc prédicteur P(L[idx]) associé au mode de prédiction L[idx] de la liste et du résidu de prédiction RES' associé au bloc courant b_{c} qui a été décodé à partir du flux de données codées STR. Le bloc prédicteur P(L[idx]) a été calculé précédemment lors de l'étape E10. Un bloc reconstruit REC pour le bloc courant b_{c} est donc obtenu en ajoutant le bloc prédicteur P(L[idx]) au résidu de prédiction décodé RES'.

Lors d'une étape E23, il est vérifié si tous les blocs de l'image à décoder ont été décodés et reconstruits. Dans le cas négatif, le procédé de décodage reprend à l'étape E10 en procédant au bloc suivant selon un parcours prédéterminé de l'image à décoder.

Dans le cas où tous les blocs de l'image ont été traités, lors d'une étape E24, une image Iₖ^{rec} est reconstruite à partir des blocs reconstruits REC et sauvegardée dans une liste d'images de référence pour être utilisée ultérieurement comme référence lors du décodage des images suivantes de la séquence d'images.

Les procédés de codage et de décodage décrits précédemment peuvent être intégrés dans des codeurs/décodeurs vidéo standards tels que H.266, HEVC/H.265, AVC/H.264 ou tout type de codeurs/décodeurs vidéo propriétaires. Les procédés de codage et de décodage selon l'invention s'appliquent également à tous types de codeurs/décodeurs d'images fixes et plus généralement de signaux utilisant un codage prédictif à l'aide de plusieurs modes de prédiction disponibles.

Les procédés de codage et de décodage ont été décrits précédemment dans le cas du codage spatial de bloc (codage intra). Ces procédés s'appliquent aisément au cas du codage d'un bloc selon d'autres types de modes de codage, inter par exemple. La liste des modes de prédiction construite peut ainsi comprendre différents types de modes de codage (intra, inter, inter-couches, ...).

### 5.5 Dispositif de codage

La figure 5 présente la structure simplifiée d'un dispositif de codage COD adapté pour mettre en œuvre le procédé de codage selon l'un quelconque des modes particuliers de réalisation de l'invention. Le dispositif de codage COD est adapté pour coder au moins une image sous la forme d'un flux de données codées, ladite image étant découpée en blocs, au moins deux modes de prédiction étant disponibles pour prédire un bloc de ladite image, dit bloc courant. Le dispositif de codage COD est notamment configuré pour:
- obtenir, pour chaque mode de prédiction disponible pour prédire ledit bloc courant, un bloc prédicteur associé au mode de prédiction disponible,
- construire une liste comprenant au moins un des deux modes de prédiction disponibles,
- pour au moins un mode de prédiction compris dans ladite liste, dit mode courant:
   - déterminer une mesure de distance du bloc prédicteur associé audit mode courant par rapport aux autres blocs prédicteurs obtenus,
   - modifier ladite liste en fonction de ladite mesure de distance déterminée,
- sélectionner parmi la liste modifiée un mode de prédiction pour coder le bloc courant,
- coder dans le flux de données, une information identifiant pour ledit bloc courant ledit mode de prédiction sélectionné dans la liste modifiée.

Selon un mode particulier de réalisation de l'invention, les étapes du procédé de codage sont mises en oeuvre par des instructions de programme d'ordinateur. Pour cela, le dispositif de codage COD a l'architecture classique d'un ordinateur et comprend notamment une mémoire MEM, une unité de traitement UT, équipée par exemple d'un microprocesseur PROC, et pilotée par le programme d'ordinateur PG stocké en mémoire MEM. Le programme d'ordinateur PG comprend des instructions pour mettre en oeuvre les étapes du procédé de codage tel que décrit ci-dessus, lorsque le programme est exécuté par le processeur PROC. A l'initialisation, les instructions de code du programme d'ordinateur PG sont par exemple chargées dans une mémoire RAM avant d'être exécutées par le processeur PROC. Le processeur PROC de l'unité de traitement UT met notamment en œuvre les étapes du procédé de codage décrit ci-dessus, selon les instructions du programme d'ordinateur PG. Selon un autre mode particulier de réalisation de l'invention, le procédé de codage est mis en œuvre par des modules fonctionnels. Pour cela, le dispositif de codage COD comprend en outre:
- un module d'obtention OBT pour obtenir, pour chaque mode de prédiction disponible pour prédire ledit bloc courant, un bloc prédicteur associé au mode de prédiction disponible,
- un module de construction COS pour construire une liste comprenant au moins un des deux modes de prédiction disponibles,
- un module de détermination DET pour déterminer une mesure de distance du bloc prédicteur associé à un mode de prédiction compris dans la liste par rapport aux autres blocs prédicteurs obtenus,
- un module de modification MOD pour modifier ladite liste en fonction de ladite mesure de distance déterminée,
- un module de sélection SEL pour sélectionner parmi la liste modifiée un mode de prédiction pour coder le bloc courant,
- un module de codage pour coder dans le flux de données, une information identifiant pour ledit bloc courant ledit mode de prédiction sélectionné dans la liste modifiée.

L'unité de traitement UT coopère avec les différents modules fonctionnels décrits ci-dessus et la mémoire MEM afin de mettre en œuvre les étapes du procédé de codage.

Les différents modules fonctionnels décrits ci-dessus peuvent être sous forme matérielle et/ou logicielle. Sous une forme logicielle, un tel module fonctionnel peut comprendre u processeur, une mémoire et des instructions de code de programme pour mettre en oeuvre la fonction correspondante au module lorsque les instructions de code sont exécutées par un le processeur. Sous une forme matérielle, un tel module fonctionnel peut mis en oeuvre par tout type de circuits d'encodage adaptés, tels que par exemple et de manière non limitative des microprocesseurs, des processeurs de traitement du signal (DSP pour Digital Signal Processor en anglais), des circuits intégrés spécifiques à des applications (ASICs pour Application Specific Integrated Circuit en anglais), des circuits FPGA pour Field Programmable Gâte Arrays en anglais, un câblage d'unités logiques.

### 5.6 Dispositif de décodage

La figure 6 présente la structure simplifiée d'un dispositif de décodage DEC adapté pour mettre en œuvre le procédé de décodage selon l'un quelconque des modes particuliers de réalisation de l'invention. Le dispositif de décodage DEC est adapté pour décoder un flux de données codées représentatif d'au moins une image, ladite image étant découpée en blocs, au moins deux modes de prédiction étant disponibles pour prédire un bloc, dit bloc courant, de l'image. Le dispositif de décodage DEC est notamment configuré pour:
- obtenir, pour chaque mode de prédiction disponible pour prédire le bloc courant, un bloc prédicteur associé au mode de prédiction disponible,
- construire une liste comprenant au moins un des deux modes de prédiction disponibles,
- pour au moins un mode de prédiction compris dans ladite liste, dit mode courant:
   - déterminer une mesure de distance du bloc prédicteur associé audit mode courant par rapport aux autres blocs prédicteurs obtenus,
   - modifier ladite liste en fonction de ladite mesure de distance déterminée,
- décoder à partir du flux de données codées, une information identifiant pour ledit bloc courant, un mode de prédiction parmi la liste modifiée,
- reconstruire ledit bloc courant à partir du bloc prédicteur associé audit mode de prédiction identifié.

Selon un mode particulier de réalisation de l'invention, le dispositif de décodage DEC a l'architecture classique d'un ordinateur et comprend notamment une mémoire MEM0, une unité de traitement UT0, équipée par exemple d'un microprocesseur PROC0, et pilotée par le programme d'ordinateur PG0 stocké en mémoire MEM0. Le programme d'ordinateur PG0 comprend des instructions pour mettre en œuvre les étapes du procédé de décodage tel que décrit ci-dessus, lorsque le programme est exécuté par le processeur PROC0.

A l'initialisation, les instructions de code du programme d'ordinateur PG0 sont par exemple chargées dans une mémoire RAM avant d'être exécutées par le processeur PROC0. Le processeur PROC0 de l'unité de traitement UT0 met notamment en œuvre les étapes du procédé de décodage décrit ci-dessus, selon les instructions du programme d'ordinateur PG0.

Selon un autre mode particulier de réalisation de l'invention, le procédé de décodage est mis en œuvre par des modules fonctionnels. Pour cela, le dispositif de décodage DEC comprend en outre :
- un module d'obtention OBT0 pour obtenir, pour chaque mode de prédiction disponible pour prédire le bloc courant, un bloc prédicteur associé au mode de prédiction disponible,
- un module de construction COS0 pour construire une liste comprenant au moins un des deux modes de prédiction disponibles,
- un module de détermination DET0 pour déterminer une mesure de distance du bloc prédicteur associé à un mode de prédiction compris dans ladite liste, par rapport aux autres blocs prédicteurs obtenus,
- un module de modification MOD0 pour modifier ladite liste en fonction de ladite mesure de distance déterminée,
- un module de décodage DC pour décoder à partir du flux de données codées, une information identifiant pour ledit bloc courant, un mode de prédiction parmi la liste modifiée,
- un module de reconstruction RC pour reconstruire ledit bloc courant à partir du bloc prédicteur associé audit mode de prédiction identifié.

L'unité de traitement UT0 coopère avec les différents modules fonctionnels décrits ci-dessus et la mémoire MEM0 afin de mettre en œuvre les étapes du procédé de décodage.

Les différents modules fonctionnels décrits ci-dessus peuvent être sous forme matérielle et/ou logicielle. Sous une forme logicielle, un tel module fonctionnel peut comprendre un processeur, une mémoire et des instructions de code de programme pour mettre en œuvre la fonction correspondante au module lorsque les instructions de code sont exécutées par un le processeur. Sous une forme matérielle, un tel module fonctionnel peut mis en œuvre par tout type de circuits d'encodage adaptés, tels que par exemple et de manière non limitative des microprocesseurs, des processeurs de traitement du signal (DSP pour Digital Signal Processor en anglais), des circuits intégrés spécifiques à des applications (ASICs pour Application Specific Integrated Circuit en anglais), des circuits FPGA pour Field Programmable Gâte Arrays en anglais, un câblage d'unités logiques.

## Revendications

1. Procédé de décodage d'un flux de données codées représentatif d'au moins une image, ladite image étant découpée en blocs, au moins deux modes de prédiction étant disponibles pour prédire un bloc, dit bloc courant, de l'image, lesdits au moins deux modes de prédiction disponibles appartenant à une pluralité de modes de prédiction intra définis par un standard de compression, ladite pluralité comprenant une première liste des modes de prédiction intra les plus probables (MPM) et une deuxième liste comprenant les autres modes de prédiction intra, dits restants (non MPM), undit mode de prédiction intra étant disponible pour prédire le bloc courant selon une position du bloc courant dans l'image, le procédé de décodage comprend les étapes suivantes, pour ledit bloc courant:
- pour chaque mode de prédiction disponible pour prédire ledit bloc courant, obtention (E101) d'un bloc prédicteur associé au mode de prédiction disponible, le bloc prédicteur étant de la même taille que le bloc courant et comprenant la prédiction fournie par le mode de prédiction auquel il est associé ;
- construction (E102) d'une liste comprenant au moins un des deux modes de prédiction disponibles, par ajout dans ladite liste d'au moins les modes de prédictions disponibles pour le bloc courant et appartenant à la deuxième liste,
- pour chaque mode de prédiction compris dans ladite liste, dit mode courant:
• détermination (E1042, E1043) de mesures de distance entre le bloc prédicteur associé audit mode courant et chacun des autres blocs prédicteurs associés aux autres modes de prédiction disponibles et obtenus pour ledit bloc courant, une mesure de distance entre le bloc prédicteur et undit autre bloc prédicteur correspondant à une mesure de la différence entre la prédiction fournie par le bloc prédicteur associé audit mode courant et la prédiction fournie par ledit autre bloc,
• modification (E1045) de ladite liste en fonction des mesures de distance déterminées, la modification de la liste correspondant à :
∘ une suppression du mode courant, le mode courant étant supprimé de la liste lorsque le bloc prédicteur associé audit mode courant est similaire à un bloc prédicteur associé à un autre mode de prédiction disponible, c'est-à-dire lorsque la mesure de distance est inférieure à un seuil prédéterminé, ou,
∘ un ré-ordonnancement de la liste, selon lequel les modes de prédiction de la liste sont ordonnés selon un ordre décroissant des mesures de distance déterminées pour chaque mode de prédiction de la liste,
- décodage (E20) à partir du flux de données codées, d'une information identifiant pour ledit bloc courant, un mode de prédiction parmi la liste modifiée,
- reconstruction (E22) dudit bloc courant à partir du bloc prédicteur associé audit mode de prédiction identifié.

2. Procédé de codage d'au moins une image sous la forme d'un flux de données codées, ladite image étant découpée en blocs, au moins deux modes de prédiction étant disponibles pour prédire un bloc de ladite image, dit bloc courant, lesdits au moins deux modes de prédiction disponibles appartenant à une pluralité de modes de prédiction intra définis par un standard de compression, ladite pluralité comprenant une première liste des modes de prédiction intra les plus probables (MPM) et une deuxième liste comprenant les autres modes de prédiction intra, dits restants (non MPM), undit mode de prédiction étant disponible pour prédire le bloc courant selon une position du bloc courant dans l'image,le procédé de codage comprend les étapes suivantes, pour ledit bloc courant:
- pour chaque mode de prédiction disponible pour prédire ledit bloc courant, obtention (E101) d'un bloc prédicteur associé au mode de prédiction disponible, le bloc prédicteur étant de la même taille que le bloc courant et comprenant la prédiction fournie par le mode de prédiction auquel il est associé ;
- construction (E102) d'une liste comprenant au moins un des deux modes de prédiction disponibles, par ajout dans ladite liste d'au moins les modes de prédictions disponibles pour le bloc courant et appartenant à la deuxième liste,
- pour chaque mode de prédiction compris dans ladite liste, dit mode courant:
• détermination (E1042, E1043) de mesures de distance entre le bloc prédicteur associé audit mode courant et chacun des autres blocs prédicteurs associés aux autres modes de prédiction disponibles et obtenus pour ledit bloc courant, une mesure de distance entre le bloc prédicteur et undit autre bloc prédicteur correspondant à une mesure de la différence entre la prédiction fournie par le bloc prédicteur associé audit mode courant et la prédiction fournie par ledit autre bloc,
• modification (E1045) de ladite liste en fonction des mesures de distance déterminées, la modification de la liste correspondant à :
- une suppression du mode courant, le mode courant étant supprimé de la liste lorsque le bloc prédicteur associé audit mode courant est similaire à un bloc prédicteur associé à un autre mode de prédiction disponible, c'est-à-dire lorsque la mesure de distance est inférieure à un seuil prédéterminé, ou,
- un ré-ordonnancement de la liste, selon lequel les modes de prédiction de la liste sont ordonnés selon un ordre décroissant des mesures de distance déterminées pour chaque mode de prédiction de la liste,
- sélection (E11) parmi la liste modifiée d'un mode de prédiction pour coder le bloc courant,
- codage (E12) dans le flux de données, d'une information identifiant pour ledit bloc courant, ledit mode de prédiction sélectionné dans la liste modifiée.

3. Procédé selon la revendication 1 ou selon la revendication 2, dans lequel la modification est une suppression du mode courant et l'autre mode de prédiction disponible n'est pas compris dans ladite liste.

4. Procédé selon l'une quelconque des revendications 1 à 3, dans lequel la mesure de distance pour un premier bloc prédicteur est déterminée par un calcul d'une erreur quadratique calculée entre ledit premier bloc prédicteur et un deuxième bloc prédicteur, ledit premier bloc prédicteur étant similaire audit deuxième bloc prédicteur lorsque l'erreur quadratique calculée est inférieure à un seuil prédéterminé.

5. Procédé selon la revendication 4, dans lequel le seuil prédéterminé varie avec la taille du bloc courant.

6. Procédé selon l'une quelconque des revendications 4 à 5, dans lequel les étapes de détermination d'une mesure de distance d'un bloc prédicteur associé à un mode de prédiction de la liste et de modification de ladite liste en fonction de la mesure de distance déterminée sont itérées de sorte que la liste modifiée comprenne un nombre de modes de prédiction égal à 2^{N}, N étant un nombre de bits sur lequel un index de la liste est codé.

7. Procédé selon la revendication 1 ou la revendication 2, et lorsque la modification de la liste correspond à un ré-ordonnancement de la liste, la mesure de distance pour chaque mode de prédiction compris dans la liste est déterminée par un calcul de l'énergie du bloc prédicteur associé audit mode de prédiction et obtenu pour ledit mode courant.

8. Procédé selon la revendication 1 ou la revendication 2, et lorsque la modification de la liste correspond à un ré-ordonnancement de la liste, la mesure de distance est déterminée par un calcul de la distance euclidienne entre le bloc prédicteur et un autre bloc prédicteur associé à un autre mode de prédiction.

9. Procédé selon la revendication 1 ou la revendication 2, dans lequel le type de modification de la liste correspondant à une suppression ou à un ré-ordonnancement de la liste est déterminé selon le type de codage intra ou inter de ladite image.

10. Dispositif de décodage d'un flux de données codées représentatif d'au moins une image, ladite image étant découpée en blocs, au moins deux modes de prédiction étant disponibles pour prédire un bloc, dit bloc courant, de l'image, lesdits au moins deux modes de prédiction disponibles appartenant à une pluralité de modes de prédiction intra définis par un standard de compression, ladite pluralité comprenant une première liste des modes de prédiction intra les plus probables (MPM) et une deuxième liste comprenant les autres modes de prédiction intra, dits restants (non MPM), undit mode de prédiction étant disponible pour prédire le bloc courant selon une position du bloc courant dans l'image, le dispositif de décodage est adapté pour :
- obtenir, pour chaque mode de prédiction disponible pour prédire le bloc courant, un bloc prédicteur associé au mode de prédiction disponible, le bloc prédicteur étant de la même taille que le bloc courant et comprenant la prédiction fournie par le mode de prédiction auquel il est associé ;
- construire une liste comprenant au moins un des deux modes de prédiction disponibles, par ajout dans ladite liste d'au moins les modes de prédictions disponibles pour le bloc courant et appartenant à la deuxième liste ;
- pour chaque mode de prédiction compris dans ladite liste, dit mode courant:
• déterminer des mesures de distance entre le bloc prédicteur associé audit mode courant et chacun des autres blocs prédicteurs associés aux autres modes de prédiction disponibles et obtenus pour ledit bloc courant, une mesure de distance entre le bloc prédicteur et undit autre bloc prédicteur correspondant à une mesure de la différence entre la prédiction fournie par le bloc prédicteur associé audit mode courant et la prédiction fournie par ledit autre bloc,
• modifier ladite liste en fonction des mesures de distance déterminées, la modification de la liste correspondant à :
∘ une suppression du mode courant, le mode courant étant supprimé de la liste lorsque le bloc prédicteur associé audit mode courant est similaire à un bloc prédicteur associé à un autre mode de prédiction disponible, c'est-à-dire lorsque la mesure de distance est inférieure à un seuil prédéterminé, ou,
∘ un ré-ordonnancement de la liste, selon lequel les modes de prédiction de la liste sont ordonnés selon un ordre décroissant des mesures de distance déterminées pour chaque mode de prédiction de la liste,
- décoder à partir du flux de données codées, une information identifiant pour ledit bloc courant, un mode de prédiction parmi la liste modifiée,
- reconstruire ledit bloc courant à partir du bloc prédicteur associé audit mode de prédiction identifié.

11. Dispositif de codage d'au moins une image sous la forme d'un flux de données codées, ladite image étant découpée en blocs, au moins deux modes de prédiction étant disponibles pour prédire un bloc de ladite image, dit bloc courant, lesdits au moins deux modes de prédiction disponibles appartenant à une pluralité de modes de prédiction intra définis par un standard de compression, ladite pluralité comprenant une première liste des modes de prédiction intra les plus probables (MPM) et une deuxième liste comprenant les autres modes de prédiction intra, dits restants (non MPM), undit mode de prédiction étant disponible pour prédire le bloc courant selon une position du bloc courant dans l'image, le dispositif de codage est configuré pour:
- obtenir, pour chaque mode de prédiction disponible pour prédire ledit bloc courant, un bloc prédicteur associé au mode de prédiction disponible, le bloc prédicteur étant de la même taille que le bloc courant et comprenant la prédiction fournie par le mode de prédiction auquel il est associé ;
- construire une liste comprenant au moins un des deux modes de prédiction disponibles, par ajout dans ladite liste d'au moins les modes de prédictions disponibles pour le bloc courant et appartenant à la deuxième liste ;
- pour chaque mode de prédiction compris dans ladite liste, dit mode courant:
• déterminer des mesures de distance entre le bloc prédicteur associé audit mode courant et chacun des autres blocs prédicteurs associés aux autres modes de prédiction disponibles et obtenus pour ledit bloc courant, une mesure de distance entre le bloc prédicteur et undit autre bloc prédicteur correspondant à une mesure de la différence entre la prédiction fournie par le bloc prédicteur associé audit mode courant et la prédiction fournie par ledit autre bloc,
• modifier ladite liste en fonction des mesures de distance déterminées, la modification de la liste correspondant à :
- une suppression du mode courant, le mode courant étant supprimé de la liste lorsque le bloc prédicteur associé audit mode courant est similaire à un bloc prédicteur associé à un autre mode de prédiction disponible, c'est-à-dire lorsque la mesure de distance est inférieure à un seuil prédéterminé, ou
∘ un ré-ordonnancement de la liste, selon lequel les modes de prédiction de la liste sont ordonnés selon un ordre décroissant des mesures de distance déterminées pour chaque mode de prédiction de la liste,
- sélectionner parmi la liste modifiée un mode de prédiction pour coder le bloc courant,
- coder dans le flux de données, une information identifiant pour ledit bloc courant ledit mode de prédiction sélectionné dans la liste modifiée.

12. Programme d'ordinateur comportant des instructions pour la mise en œuvre du procédé de décodage selon l'une quelconque des revendications 1 ou 3 à 9, lorsque ledit programme est exécuté par un processeur.

13. Programme d'ordinateur comportant des instructions pour la mise en œuvre du procédé de codage selon l'une quelconque des revendications 2 à 9, lorsque ledit programme est exécuté par un processeur.

## Patentansprüche

1. Verfahren zur Dekodierung eines Stroms kodierter Daten, der mindestens ein Bild darstellt, wobei das genannte Bild in Blöcke aufgeteilt wird, wobei mindestens zwei Prädiktionsmodi verfügbar sind, um einen Block, der als aktueller Block bezeichnet wird, des Bilds zu prädizieren, wobei die genannten mindestens zwei verfügbaren Prädiktionsmodi zu einer Mehrzahl von Intraprädiktionsmodi gehören, die durch einen Kompressionsstandard definiert werden, wobei die genannte Mehrzahl eine erste Liste von wahrscheinlichsten Intraprädiktionsmodi (MPM) und eine zweite Liste, umfassend die anderen Intraprädiktionsmodi (nicht MPM), die als die übrigen bezeichnet werden, umfasst, wobei ein genannter Intraprädiktionsmodus verfügbar ist, um den aktuellen Block gemäß einer Position des aktuellen Blocks in dem Bild zu prädizieren, wobei das Dekodierungsverfahren die folgenden Schritte für den genannten aktuellen Block umfasst:
- für jeden verfügbaren Prädiktionsmodus, um den genannten aktuellen Block zu prädizieren, Erhalten (E101) eines Prädiktorblocks, der mit dem verfügbaren Prädiktionsmodus assoziiert ist, wobei der Prädiktorblock dieselbe Größe aufweist wie der aktuelle Block und die Prädiktion umfasst, die von dem Prädiktionsmodus bereitgestellt wird, mit dem er assoziiert ist;
- Erstellen (E102) einer Liste, umfassend mindestens einen der beiden verfügbaren Prädiktionsmodi, durch Hinzufügen, zu der genannten Liste, mindestens der Prädiktionsmodi, die für den aktuellen Block verfügbar sind und zu der zweiten Liste gehören,
- für jeden Prädiktionsmodus, der in der genannten Liste enthalten ist, und der als aktueller Modus bezeichnet wird:
• Bestimmen (E1042, E1043) von Maßen der Distanz zwischen dem Prädiktorblock, der mit dem genannten aktuellen Modus assoziiert ist, und jedem der anderen Prädiktorblöcke, welche mit den anderen Prädiktionsmodi assoziiert sind, die verfügbar sind und für den aktuellen Block erhalten werden, wobei ein Maß der Distanz zwischen dem Prädiktorblock und einem genannten anderen Prädiktorblock einem Maß der Differenz entspricht zwischen der Prädiktion, die von dem Prädiktorblock bereitgestellt wird, der mit dem aktuellen Modus assoziiert ist, und der Prädiktion, die von dem genannten anderen Block bereitgestellt wird,
• Modifizieren (E1045) der genannten Liste in Abhängigkeit von den bestimmten Distanzmaßen, wobei die Modifikation der Liste entspricht:
∘ einer Unterdrückung des aktuellen Modus, wobei der aktuelle Modus in der Liste unterdrückt wird, wenn der Prädiktorblock, der mit dem genannten aktuellen Modus assoziiert ist, einem Prädiktorblock ähnlich ist, der mit einem anderen verfügbaren Prädiktionsmodus assoziiert ist, das heißt, wenn das Distanzmaß kleiner ist als eine vorherbestimmte Schwelle, oder
∘ einer Umordnung der Liste, gemäß der die Prädiktionsmodi der Liste gemäß einer absteigenden Reihenfolge der Distanzmaße geordnet werden, die für jeden Prädiktionsmodus der Liste bestimmt werden,
- Dekodieren (E20), aus dem Strom der codierten Daten, einer Information, die für den genannten aktuellen Block einen Prädiktionsmodus in der modifizierten Liste identifiziert,
- Rekonstruieren (E22) des genannten aktuellen Blocks aus dem Prädiktorblock, der mit dem genannten identifizierten Prädiktionsmodus assoziiert ist.

2. Verfahren zur Kodierung mindestens eines Bilds in der Form eines Stroms kodierter Daten, wobei das genannte Bild in Blöcke aufgeteilt wird, wobei mindestens zwei Prädiktionsmodi verfügbar sind, um einen Block des genannten Bilds, der als aktueller Block bezeichnet wird, zu prädizieren, wobei die genannten mindestens zwei verfügbaren Prädiktionsmodi zu einer Mehrzahl von Intraprädiktionsmodi gehören, die durch einen Kompressionsstandard definiert werden, wobei die genannte Vielzahl eine erste Liste von wahrscheinlichsten Intraprädiktionsmodi (MPM) und eine zweite Liste, umfassend die anderen Intraprädiktionsmodi (nicht MPM), die als die übrigen bezeichnet werden, umfasst, wobei ein genannter Prädiktionsmodus verfügbar ist, um den aktuellen Block gemäß einer Position des aktuellen Blocks in dem Bild zu prädizieren, wobei das Kodierungsverfahren die folgenden Schritte für den genannten aktuellen Block umfasst:
- für jeden verfügbaren Prädiktionsmodus, um den genannten aktuellen Block zu prädizieren, Erhalten (E101) eines Prädiktorblocks, der mit dem verfügbaren Prädiktionsmodus assoziiert ist, wobei der Prädiktorblock dieselbe Größe aufweist wie der aktuelle Block und die Prädiktion umfasst, die von dem Prädiktionsmodus bereitgestellt wird, mit dem er assoziiert ist;
- Erstellen (E102) einer Liste, umfassend mindestens einen der beiden verfügbaren Prädiktionsmodi, durch Hinzufügen, zu der genannten Liste, mindestens der Prädiktionsmodi, die für den aktuellen Block verfügbar sind und zu der zweiten Liste gehören,
- für jeden Prädiktionsmodus, der in der genannten Liste enthalten ist, und der als aktueller Modus bezeichnet wird:
• Bestimmen (E1042, E1043) von Maßen der Distanz zwischen dem Prädiktorblock, der mit dem genannten aktuellen Modus assoziiert ist, und jedem der anderen Prädiktorblöcke, welche mit den anderen Prädiktionsmodi assoziiert sind, die verfügbar sind und für den aktuellen Block erhalten werden, wobei ein Maß der Distanz zwischen dem Prädiktorblock und einem genannten anderen Prädiktorblock einem Maß der Differenz entspricht zwischen der Prädiktion, die von dem Prädiktorblock bereitgestellt wird, der mit dem aktuellen Modus assoziiert ist, und der Prädiktion, die von dem genannten anderen Block bereitgestellt wird,
• Modifizieren (E1045) der genannten Liste in Abhängigkeit von den bestimmten Distanzmaßen, wobei die Modifikation der Liste entspricht:
∘ einer Unterdrückung des aktuellen Modus, wobei der aktuelle Modus in der Liste unterdrückt wird, wenn der Prädiktorblock, der mit dem genannten aktuellen Modus assoziiert ist, einem Prädiktorblock ähnlich ist, der mit einem anderen verfügbaren Prädiktionsmodus assoziiert ist, das heißt, wenn das Distanzmaß kleiner ist als eine vorherbestimmte Schwelle, oder
∘ einer Umordnung der Liste, gemäß der die Prädiktionsmodi der Liste gemäß einer absteigenden Reihenfolge der Distanzmaße geordnet werden, die für jeden Prädiktionsmodus der Liste bestimmt werden,
- Auswählen (E11), aus der modifizierten Liste, eines Prädiktionsmodus, um den aktuellen Block zu kodieren,
- Kodieren (E12), in dem Datenstrom, einer Information, die für den genannten aktuellen Block den genannten Prädiktionsmodus identifiziert, der aus der modifizierten Liste ausgewählt wird.

3. Verfahren nach Anspruch 1 oder nach Anspruch 2, wobei die Modifikation eine Unterdrückung des aktuellen Modus ist, und der verfügbare andere Prädiktionsmodus nicht in der genannten Liste enthalten ist.

4. Verfahren nach einem der Ansprüche 1 bis 3, wobei das Distanzmaß für einen ersten Prädiktorblock durch eine Berechnung eines quadratischen Fehlers bestimmt wird, der zwischen dem genannten ersten Prädiktorblock und einem zweiten Prädiktorblock berechnet wird, wenn der berechnete quadratische Fehler kleiner ist als eine vorherbestimmte Schwelle.

5. Verfahren nach Anspruch 4, wobei die vorherbestimmte Schwelle mit der Größe des aktuellen Blocks variiert.

6. Verfahren nach einem der Ansprüche 4 bis 5, wobei die Schritte des Bestimmens eines Maßes der Distanz eines Prädiktorblocks, der mit einem Prädiktionsmodus der Liste und der Modifikation der genannten Liste in Abhängigkeit von dem bestimmten Distanzmaß assoziiert ist, derart iteriert werden, dass die modifizierte Liste eine Anzahl von Prädiktionsmodi gleich 2^{N} umfasst, wobei N eine Anzahl von Bits ist, mit der ein Index der Liste kodiert wird.

7. Verfahren nach Anspruch 1 oder Anspruch 2, und wenn die Modifikation der Liste einer Umordnung der Liste entspricht, wobei das Distanzmaß für jeden Prädiktionsmodus, der in der Liste enthalten ist, durch eine Berechnung der Energie des Prädiktorblocks bestimmt wird, der mit dem genannten Prädiktionsmodus assoziiert ist und für den aktuellen Modus erhalten wird.

8. Verfahren nach Anspruch 1 oder Anspruch 2, und wenn die Modifikation der Liste einer Umordnung der Liste entspricht, wobei das Distanzmaß durch eine Berechnung der Euklidischen Distanz zwischen dem Prädiktorblock und einem anderen Prädiktorblock bestimmt wird, der mit einem anderen Prädiktionsmodus assoziiert ist.

9. Verfahren nach Anspruch 1 oder Anspruch 2, wobei der Typ der Modifikation der Liste, der einer Unterdrückung oder einer Umordnung der Liste entspricht, gemäß dem Typ der Intra- oder Interkodierung des genannten Bilds bestimmt wird.

10. Vorrichtung zur Dekodierung eines Stroms kodierter Daten, der mindestens ein Bild darstellt, wobei das genannte Bild in Blöcke aufgeteilt wird, wobei mindestens zwei Prädiktionsmodi verfügbar sind, um einen Block, der als aktueller Block bezeichnet wird, des Bilds zu prädizieren, wobei die genannten mindestens zwei verfügbaren Prädiktionsmodi zu einer Mehrzahl von Intraprädiktionsmodi gehören, die durch einen Kompressionsstandard definiert werden, wobei die genannte Mehrzahl eine erste Liste von wahrscheinlichsten Intraprädiktionsmodi (MPM) und eine zweite Liste, umfassend die anderen Intraprädiktionsmodi (nicht MPM), die als die übrigen bezeichnet werden, umfasst, wobei ein genannter Prädiktionsmodus verfügbar ist, um den aktuellen Block gemäß einer Position des aktuellen Blocks in dem Bild zu prädizieren, wobei die Dekodierungsvorrichtung geeignet ist zum:
- Erhalten für jeden verfügbaren Prädiktionsmodus, um den aktuellen Block zu prädizieren, eines Prädiktorblocks, der mit dem verfügbaren Prädiktionsmodus assoziiert ist, wobei der Prädiktorblock dieselbe Größe aufweist wie der aktuelle Block und die Prädiktion umfasst, die von dem Prädiktionsmodus bereitgestellt wird, mit dem er assoziiert ist;
- Erstellen einer Liste, umfassend mindestens einen der beiden verfügbaren Prädiktionsmodi, durch Hinzufügen, zu der genannten Liste, mindestens der Prädiktionsmodi, die für den aktuellen Block verfügbar sind und zu der zweiten Liste gehören,
- für jeden Prädiktionsmodus, der in der genannten Liste enthalten ist, und der als aktueller Modus bezeichnet wird:
• Bestimmen von Maßen der Distanz zwischen dem Prädiktorblock, der mit dem genannten aktuellen Modus assoziiert ist, und jedem der anderen Prädiktorblöcke, welche mit den anderen Prädiktionsmodi assoziiert sind, die verfügbar sind und für den aktuellen Block erhalten werden, wobei ein Maß der Distanz zwischen dem Prädiktorblock und einem genannten anderen Prädiktorblock einem Maß der Differenz entspricht zwischen der Prädiktion, die von dem Prädiktorblock bereitgestellt wird, der mit dem aktuellen Modus assoziiert ist, und der Prädiktion, die von dem genannten anderen Block bereitgestellt wird,
• Modifizieren der genannten Liste in Abhängigkeit von den bestimmten Distanzmaßen, wobei die Modifikation der Liste entspricht:
∘ einer Unterdrückung des aktuellen Modus, wobei der aktuelle Modus in der Liste unterdrückt wird, wenn der Prädiktorblock, der mit dem genannten aktuellen Modus assoziiert ist, einem Prädiktorblock ähnlich ist, der mit einem anderen verfügbaren Prädiktionsmodus assoziiert ist, das heißt, wenn das Distanzmaß kleiner ist als eine vorherbestimmte Schwelle, oder
∘ einer Umordnung der Liste, gemäß der die Prädiktionsmodi der Liste gemäß einer absteigenden Reihenfolge der Distanzmaße geordnet werden, die für jeden Prädiktionsmodus der Liste bestimmt werden,
- Dekodieren, aus dem Strom der codierten Daten, einer Information, die für den genannten aktuellen Block einen Prädiktionsmodus in der modifizierten Liste identifiziert,
- Rekonstruieren des genannten aktuellen Blocks aus dem Prädiktorblock, der mit dem genannten identifizierten Prädiktionsmodus assoziiert ist.

11. Vorrichtung zur Kodierung mindestens eines Bilds in der Form eines Stroms kodierter Daten, wobei das genannte Bild in Blöcke aufgeteilt wird, wobei mindestens zwei Prädiktionsmodi verfügbar sind, um einen Block des genannten Bilds, der als aktueller Block bezeichnet wird, zu prädizieren, wobei die genannten mindestens zwei verfügbaren Prädiktionsmodi zu einer Mehrzahl von Intraprädiktionsmodi gehören, die durch einen Kompressionsstandard definiert werden, wobei die genannte Mehrzahl eine erste Liste von wahrscheinlichsten Intraprädiktionsmodi (MPM) und eine zweite Liste, umfassend die anderen Intraprädiktionsmodi (nicht MPM), die als die übrigen bezeichnet werden, umfasst, wobei ein genannter Prädiktionsmodus verfügbar ist, um den aktuellen Block gemäß einer Position des aktuellen Blocks in dem Bild zu prädizieren, wobei die Kodierungsvorrichtung ausgelegt ist zum:
- Erhalten für jeden verfügbaren Prädiktionsmodus, um den aktuellen Block zu prädizieren, eines Prädiktorblocks, der mit dem verfügbaren Prädiktionsmodus assoziiert ist, wobei der Prädiktorblock dieselbe Größe aufweist wie der aktuelle Block und die Prädiktion umfasst, die von dem Prädiktionsmodus bereitgestellt wird, mit dem er assoziiert ist;
- Erstellen einer Liste, umfassend mindestens einen der beiden verfügbaren Prädiktionsmodi, durch Hinzufügen, zu der genannten Liste, mindestens der Prädiktionsmodi, die für den aktuellen Block verfügbar sind und zu der zweiten Liste gehören,
- für jeden Prädiktionsmodus, der in der genannten Liste enthalten ist, und der als aktueller Modus bezeichnet wird:
• Bestimmen von Maßen der Distanz zwischen dem Prädiktorblock, der mit dem genannten aktuellen Modus assoziiert ist, und jedem der anderen Prädiktorblöcke, welche mit den anderen Prädiktionsmodi assoziiert sind, die verfügbar sind und für den aktuellen Block erhalten werden, wobei ein Maß der Distanz zwischen dem Prädiktorblock und einem genannten anderen Prädiktorblock einem Maß der Differenz entspricht zwischen der Prädiktion, die von dem Prädiktorblock bereitgestellt wird, der mit dem aktuellen Modus assoziiert ist, und der Prädiktion, die von dem genannten anderen Block bereitgestellt wird,
• Modifizieren der genannten Liste in Abhängigkeit von den bestimmten Distanzmaßen, wobei die Modifikation der Liste entspricht:
∘ einer Unterdrückung des aktuellen Modus, wobei der aktuelle Modus in der Liste unterdrückt wird, wenn der Prädiktorblock, der mit dem genannten aktuellen Modus assoziiert ist, einem Prädiktorblock ähnlich ist, der mit einem anderen verfügbaren Prädiktionsmodus assoziiert ist, das heißt, wenn das Distanzmaß kleiner ist als eine vorherbestimmte Schwelle, oder
∘ einer Umordnung der Liste, gemäß der die Prädiktionsmodi der Liste gemäß einer absteigenden Reihenfolge der Distanzmaße geordnet werden, die für jeden Prädiktionsmodus der Liste bestimmt werden,
- Auswählen, aus der modifizierten Liste, eines Prädiktionsmodus, um den aktuellen Block zu kodieren,
- Kodieren, in dem Datenstrom, einer Information, die für den genannten aktuellen Block den genannten Prädiktionsmodus identifiziert, der aus der modifizierten Liste ausgewählt wird.

12. Computerprogramm, umfassend Instruktionen zur Durchführung des Dekodierungsverfahrens nach einem der Ansprüche 1 oder 3 bis 9, wenn das genannte Programm von einem Prozessor ausgeführt wird.

13. Computerprogramm, umfassend Instruktionen zur Durchführung des Kodierungsverfahrens nach einem der Ansprüche 2 bis 9, wenn das genannte Programm von einem Prozessor ausgeführt wird.

## Claims

1. Method for decoding an encoded data stream representing at least one image, said image being subdivided into blocks, at least two prediction modes being available to predict a block, called a current block, of the image, said at least two available prediction modes belonging to a plurality of intra prediction modes defined by a compression standard, said plurality comprising a first list of the most probable intra prediction modes (MPM) and a second list comprising the other intra prediction modes, called remaining modes (non MPM), one of said intra prediction modes being available to predict the current block depending on a position of the current block in the image, the method comprising, for said current block, the following steps:
- for each prediction mode available for predicting said current block, obtaining (E101) a predictive block associated with the available prediction mode, the predictive block having the same size as the current block and comprising the prediction given by the prediction mode it is associated with,
- building (E102) a list comprising at least one of the two available prediction modes, by adding to said list at least the intra prediction modes available for the current block and belonging to the second list,
- for at least one prediction mode included in said list, called a current mode:
• determining (E1042, E1043) a measurement of distance between the predictive block associated with said current mode and each of the other predictive blocks associated with the other available prediction modes and obtained for said current block, a measurement of distance between the predictive block and another predictive block corresponding to a measurement of the difference between the prediction given by the predictive block associated with the current mode and the prediction given by the other predictive block,
• modifying (E1045) said list as a function of said determined measurement of distance, said modification corresponding to:
∘ an elimination of said current mode from the list, wherein said current mode is eliminated from the list when the predictive block associated with the current mode is similar to a predictive block associated with another available prediction mode, that is when the measurement of distance is below a predetermined threshold, or
∘ a re-ordering of the list, wherein the prediction modes of the list are ordered according to a descending order of the criterion of distance determined for each prediction mode of the list,
- decoding (E20), from the stream of encoded blocks, a piece of information identifying, for said current block, a prediction mode from the modified list,
- rebuilding (E22) said current block from the predictive block associated with said identified prediction mode.

2. Method for encoding at least one image in the form of a stream of encoded data, said image being subdivided into blocks, at least two prediction modes being available to predict a block of said image, called a current block, said at least two available prediction modes belonging to a plurality of intra prediction modes defined by a compression standard, said plurality comprising a first list of the most probable intra prediction modes (MPM) and a second list comprising the other intra prediction modes, called remaining modes (non MPM), one of said intra prediction modes being available to predict the current block depending on a position of the current block in the image, the method for encoding comprising the following steps, for said current block:
- for each prediction mode available for predicting said current block, obtaining (E101) a predictive block associated with the available prediction mode, the predictive block having the same size as the current block and comprising the prediction given by the prediction mode it is associated with,
- building (E102) a list comprising at least one of the two available prediction modes, by adding to said list at least the intra prediction modes available for the current block and belonging to the second list,
- for at least one prediction mode included in said list, called a current mode:
• determining (E1042, E1043) a measurement of distance between the predictive block associated with said current mode and each of the other predictive blocks associated with the other available prediction modes and obtained for said current block, a measurement of distance between the predictive block and another predictive block corresponding to a measurement of the difference between the prediction given by the predictive block associated with the current mode and the prediction given by the other predictive block,
• modifying (E1045) said list as a function of said determined measurement of distance, said modification corresponding to:
∘ an elimination of said current mode from the list, wherein said current mode is eliminated from the list when the predictive block associated with the current mode is similar to a predictive block associated with another available prediction mode, that is when the measurement of distance is below a predetermined threshold, or
∘ a re-ordering of the list, wherein the prediction modes of the list are ordered according to a descending order of the criterion of distance determined for each prediction mode of the list,
- selecting (E11), from the modified list, a prediction mode to encode the current block,
- encoding (E12), in the data stream, a piece of information identifying, for said current block, said prediction mode selected in the modified list.

3. Method according to claim 3, wherein the modification is an elimination of the current mode and the other available prediction mode is not included in said list.

4. Method according to any one of the claims 1 to 3, wherein the measurement of distance for a first predictive block is determined by a computation of a mean squared error computed between said first predictive block and a second predictive block, said first predictive block being similar to said second predictive block when the mean squared error computed is below a predetermined threshold.

5. Method according to claim 4, wherein the predetermined threshold varies with the size of the current block.

6. Method according to any one of the claims 4 to 5, wherein the steps for determining a measurement of distance of a predictive block, associated with a prediction mode from the list and for modifying said list as a function of the determined measurement of distance, are iterated so that the modified list includes a number of prediction modes equal to 2^{N}, N being a number of bits on which an index of the list is encoded.

7. Method according to claim 1 or claim 2, wherein the modification of the list corresponds to a re-ordering of the list and wherein the measurement of distance for each prediction mode included in the list is determined by a computation of the energy of the predictive block associated with said prediction mode and obtained for said current mode.

8. Method according to claim 1 or claim 2, wherein the modification of the list corresponds to a re-ordering of the list and wherein the measurement of distance is determined by a computation of the Euclidean distance between the predictive block and another predictive block associated with another prediction mode.

9. Method according to claim 1 or claim 2, wherein the type of modification of the list corresponding to an elimination from the list or a re-ordering of the list is determined according to the type of encoding intra or inter of said image.

10. Device for decoding an encoded data stream representing at least one image, said image being subdivided into blocks, at least two prediction modes being available to predict a block, called a current block, of the image, said at least two available prediction modes belonging to a plurality of intra prediction modes defined by a compression standard, said plurality comprising a first list of the most probable intra prediction modes (MPM) and a second list comprising the other intra prediction modes, called remaining modes (non MPM), one of said intra prediction modes being available to predict the current block depending on a position of the current block in the image, the decoding device being adapted to:
- obtain, for each prediction mode available for predicting said current block, a predictive block associated with the available prediction mode, the predictive block having the same size as the current block and comprising the prediction given by the prediction mode it is associated with,
- build a list comprising at least one of the two available prediction modes, by adding to said list at least the intra prediction modes available for the current block and belonging to the second list,
- for at least one prediction mode included in said list, called a current mode:
• determine a measurement of distance between the predictive block associated with said current mode and each of the other predictive blocks associated with the other available prediction modes and obtained for said current block, a measurement of distance between the predictive block and another predictive block corresponding to a measurement of the difference between the prediction given by the predictive block associated with the current mode and the prediction given by the other predictive block,
• modify said list as a function of said determined measurement of distance, said modification corresponding to:
∘ an elimination of said current mode from the list, wherein said current mode is eliminated from the list when the predictive block associated with the current mode is similar to a predictive block associated with another available prediction mode, that is when the measurement of distance is below a predetermined threshold, or
∘ a re-ordering of the list, wherein the prediction modes of the list are ordered according to a descending order of the criterion of distance determined for each prediction mode of the list,
- decode, from the stream of encoded blocks, a piece of information identifying, for said current block, a prediction mode from the modified list,
- rebuild said current block from the predictive block associated with said identified prediction mode.

11. Device for encoding at least one image in the form of a stream of encoded data, said image being subdivided into blocks, at least two prediction modes being available to predict a block of said image, called a current block, said at least two available prediction modes belonging to a plurality of intra prediction modes defined by a compression standard, said plurality comprising a first list of the most probable intra prediction modes (MPM) and a second list comprising the other intra prediction modes, called remaining modes (non MPM), one of said intra prediction modes being available to predict the current block depending on a position of the current block in the image, the device being configured to:
- obtain, for each prediction mode available for predicting said current block, a predictive block associated with the available prediction mode, the predictive block having the same size as the current block and comprising the prediction given by the prediction mode it is associated with,
- build a list comprising one of the two available prediction modes, by adding to said list at least the intra prediction modes available for the current block and belonging to the second list,
- for at least one prediction mode included in said list, called a current mode:
• determine a measurement of distance between the predictive block associated with said current mode and each of the other predictive blocks associated with the other available prediction modes and obtained for said current block, a measurement of distance between the predictive block and another predictive block corresponding to a measurement of the difference between the prediction given by the predictive block associated with the current mode and the prediction given by the other predictive block,
• modify said list as a function of said determined measurement of distance, said modification corresponding to:
∘ an elimination of said current mode from the list, wherein said current mode is eliminated from the list when the predictive block associated with the current mode is similar to a predictive block associated with another available prediction mode, that is when the measurement of distance is below a predetermined threshold, or
∘ a re-ordering of the list, wherein the prediction modes of the list are ordered according to a descending order of the criterion of distance determined for each prediction mode of the list,
- select, from the modified list, a prediction mode to encode the current block,
- encode, in the data stream, a piece of information identifying, for said current block, said prediction mode selected in the modified list.

12. Computer program comprising instructions for implementing the method for decoding according to any one of the claims 1 or 3 to 9, when said program is executed by a processor.

13. Computer program comprising instructions for implementing the method for encoding according to any one of the claims 2 to 9, when said program is executed by a processor.
